# DEMANDE DE BREVET EUROPEEN

(11) **EP 2 705 924 A2**
(43) Date de publication de la demande: **12.03.2014**
(21) Numéro de dépôt: 13182857.6
(22) Date de dépôt: 03.09.2013
(51) Int. Cl.: B23K 20/12

(54) **Procédé et dispositif d'obturation d'un conduit contenu dans un corps**

(30) Priorité: 07.09.2012 FR 1258384
(71) Demandeur: CINETIC FILLING, 44140 Le Bignon (FR)
(72) Inventeur: Paud, Pascal, 44850 Le Cellier (FR); Toutain, Nicolas, 44150 Gereon (FR)
(74) Mandataire: Blot, Philippe Robert Emile

(57) **Abrégé**

L'invention concerne un procédé d'obturation d'un conduit 3 contenu dans un corps 1, en un point d'obturation dans une partie métallique du conduit, comprenant les étapes suivantes :
- aplatissement du conduit pour obtenir une première paroi présentant une première épaisseur de matière 6e délimitée par une première surface interne 6 plane et par une première surface externe 6ext, et une deuxième paroi présentant une deuxième épaisseur de matière 7e délimitée par une deuxième surface interne 7 plane et parallèle à la première surface interne et par une deuxième surface externe 7ext,
- plongée relative d'un outil en rotation 5 autour d'un axe de rotation (A) perpendiculaire aux première et deuxième surfaces internes, selon une direction de plongée parallèle à l'axe de rotation, à partir de la première surface externe en traversant la première épaisseur de matière et au moins une partie 7f de la deuxième épaisseur de matière pour réaliser la fermeture du conduit par cisaillement et malaxage de la matière d'au moins une partie des première et deuxième épaisseurs de matière déplacée par l'outil en rotation.

## Description

La présente invention concerne l'obturation d'un conduit contenu dans un corps, notamment un conduit raccordé à un réservoir contenu dans le corps, en particulier dans le cas où le réservoir contient un fluide qui ne doit pas être pollué et/ou que ledit fluide est inflammable et/ou explosif.

L'invention trouve également une application à l'obturation d'un réservoir contenu dans un corps ou une pièce mécanique pour laquelle il est important que le niveau de fuite de ladite pièce reste très faible pendant de nombreuses années. Elle peut donc être très utile pour des applications comme la fermeture d'échangeurs de chaleur contenant des fluides frigorigènes.

Différents procédés d'obturation existent sur le marché. Ils sont généralement basés soit sur la fusion de matière(s), soit sur un principe mécanique (par exemple clinchage), soit sur un apport d'énergie (ultrasons, soudage électrique par points, etc.), soit sur un collage.

Chacun de ces procédés permet d'obtenir des produits qui présentent un taux de fuite déterminé que l'on peut mesurer avec des détecteurs de fuite de type « sniffeur » ou spectromètre de masse.

Cependant, ces procédés présentent des limites bien définies par leur domaine d'utilisation et leur taux de fuite admissible :
- les procédés de soudage à flamme, comme le TIG (« Tungsten Inert Gas »), MIG (« Metal Inert Gas »), MAG (« Metal Active Gas »), etc., permettent de garantir une bonne étanchéité pendant de nombreuses années, mais leur utilisation est incompatible et dangereuse avec la présence de produits inflammables,
- Les procédés d'obturation mécanique de type clinchage peuvent être mis en oeuvre en atmosphère de type ATEX (atmosphère explosive) ou inflammable, mais le taux de fuite des produits obtenus par ce type de procédé n'est pas acceptable (il peut même être illégal dans certains pays, notamment si le fluide est un fluide réfrigérant régi par une norme telle que la norme « F-Gaz »),
- les procédés à friction (FSW ou « Friction-stir welding », etc.) permettent d'obtenir des produits étanches après réalisation qui présentent un taux de fuite compatible avec les normes relatives aux fluides réfrigérants par exemple, mais ils ne garantissent pas l'étanchéité pendant la réalisation de l'obturation, et il peut donc se produire une pollution du fluide présent dans la pièce mécanique au cours de l'obturation,
- les procédés de type ultrasons, soudage par point ou à la molette, ne sont pas suffisamment étanches pour la réalisation d'obturations ; ces procédés sont plutôt utiles pour réaliser des assemblages,
- les procédés par collage ne sont pas adaptés car, du fait de coefficients de dilatation différents entre la colle et la pièce mécanique, les produits obtenus présentent une étanchéité qui n'est pas garantie dans la durée (risque de fuite suite aux variations de température et au travail de la pièce mécanique).

La présente invention a donc pour but de pallier notamment les inconvénients mentionnés ci-dessus, grâce à un procédé d'obturation n'utilisant pas de flamme, assurant l'étanchéité de la pièce pendant la réalisation de l'obturation et permettant d'obtenir un produit présentant un faible taux de fuite pendant de nombreuses années.

L'invention consiste principalement en un procédé d'obturation d'un conduit, par exemple raccordé à un réservoir, contenu dans une pièce mécanique ayant au moins une partie métallique où se trouve le point où est réalisée l'obturation, au moyen d'un outil en rotation caractérisé en ce qu'il consiste à réaliser les étapes suivantes :
- Aplatissement du conduit au niveau du point d'obturation de sorte d'obtenir en ce point deux surfaces sensiblement parallèles rapprochées l'une de l'autre, une des surfaces délimitant d'un côté une épaisseur de matière comprise entre cette surface et une surface externe, et l'autre surface délimitant d'un côté une autre épaisseur de matière,
- Plongée relative de l'outil en rotation au niveau du point d'obturation à partir d'une des surfaces externes en traversant les épaisseurs de matière, pour réaliser un cisaillement et un malaxage de la matière déplacée.

Selon un exemple de réalisation de l'invention, la plongée relative de l'outil en rotation est obtenue par le déplacement en translation de ce dernier, la pièce mécanique étant immobile. Dans un second exemple de réalisation de l'invention, la plongée relative de l'outil en rotation est obtenue par le déplacement de la pièce mécanique, l'outil étant fixe en translation.

Selon l'invention, l'aplatissement du conduit au niveau du point d'obturation est réalisé de sorte que les deux surfaces sensiblement parallèles soient plaquées l'une contre l'autre afin d'isoler le réservoir.

L'invention est particulièrement adaptée lorsque l'aplatissement du conduit est réalisé alors que le réservoir contient un fluide inflammable et/ou explosif car cet aplatissement permet d'éviter tout contact entre le fluide et la matière qui va subir le cisaillement-malaxage.

Selon un exemple de réalisation de l'invention, une des surfaces externes du conduit est en appui sur une surface en mouvement lors de la plongé de l'outil en rotation.

Selon un autre exemple de réalisation de l'invention, une pièce intermédiaire est placée entre une des surfaces externes du conduit et la pièce d'appui sur laquelle repose l'ensemble, pour éviter le collage de la surface externe sur la pièce d'appui lors de l'obturation.

L'invention consiste également en une machine mettant en oeuvre le procédé d'obturation caractérisé en ce qu'elle comprend un moyen pour aplatir le conduit au niveau du point d'obturation et un outil dont la rotation et le déplacement relatif vis-à-vis de la pièce mécanique permet d'obtenir le cisaillement/malaxage de la matière de celle-ci au point d'obturation.

Le cisaillement/malaxage de la matière selon l'invention est effectué par un outil rotatif autour duquel un guide est maintenu afin d'assurer l'étanchéité pendant l'opération.

Le choix des paramètres pour l'outil rotatif est à optimiser selon un plan d'expérimentation en fonction des matériaux à obturer.

Plus généralement, l'invention a ainsi pour objet un procédé d'obturation d'un conduit contenu dans un corps. Il peut s'agir par exemple d'un conduit raccordé à un réservoir formé dans le corps lui-même.

L'obturation du conduit est réalisée en un point d'obturation dans une partie métallique du conduit.

Le procédé comprend les étapes suivantes :
- aplatissement du conduit au niveau du point d'obturation de sorte d'obtenir en ce point d'obturation au moins une première paroi présentant une première épaisseur de matière délimitée par une première surface interne sensiblement plane et par une première surface externe orientées respectivement vers l'intérieur et l'extérieur du conduit, et au moins une deuxième paroi présentant une deuxième épaisseur de matière délimitée par une deuxième surface interne sensiblement plane et parallèle à la première surface interne et par une deuxième surface externe orientée vers l'extérieur du conduit,
- plongée relative d'un outil en rotation autour d'un axe de rotation (A) sensiblement perpendiculaire aux première et deuxième surfaces internes, au niveau du point d'obturation, selon une direction de plongée sensiblement parallèle à l'axe de rotation (A), à partir de la première surface externe en traversant la première épaisseur de matière et au moins une partie de la deuxième épaisseur de matière en sorte de réaliser la fermeture du conduit par cisaillement et malaxage de la matière d'au moins une partie de la première et de la deuxième épaisseurs de matière déplacée par l'outil en rotation.

Suivant différentes variantes de mise en oeuvre, le procédé de l'invention comprend une ou plusieurs des caractéristiques présentées ci-après, qui peuvent être prises isolément ou suivant toutes les combinaisons techniquement possibles :
- l'aplatissement du conduit au niveau du point d'obturation est réalisé de sorte que les première et deuxième surfaces internes soient plaquées l'une contre l'autre afin d'isoler le réservoir,
- l'outil en rotation est guidé en plongée le long de l'axe de rotation (A) dans la partie haute d'une ouverture traversante formée dans un guide de sorte d'éviter les vibrations de l'outil,
- les dimensions de l'ouverture sont telles que, lors de la plongée de l'outil en rotation, un volume délimité entre cette ouverture et l'outil en rotation reste disponible pour accueillir la matière du conduit déplacée par l'outil en rotation,
- l'aplatissement du conduit est obtenu en positionnant directement ou indirectement la deuxième surface externe du conduit sur une surface d'appui et en appliquant, par exemple, un poinçon au niveau du point d'obturation sur la première surface externe,
- lors de l'étape de plongée, l'outil en rotation ne traverse pas la totalité de l'épaisseur de matière de la deuxième paroi, laissant subsister un opercule de matière du côté de la deuxième surface externe.

De plus, suivant d'autres variantes de mise en oeuvre, le procédé de l'invention comprend également une ou plusieurs des caractéristiques présentées ci-après, qui peuvent être ajoutées isolément ou suivant toutes les combinaisons techniquement possibles :
- l'aplatissement du conduit au niveau du point d'obturation est réalisé alors que le réservoir contient un fluide inflammable et/ou explosif,
- un patin peut être disposé entre la surface d'appui et la deuxième surface externe du conduit, en sorte d'éviter le collage de la deuxième surface externe du conduit sur la surface d'appui,
- le patin est mis en mouvement, notamment de rotation autour d'un axe parallèle à l'axe de rotation (A) et/ou de translation sur un plan perpendiculaire à l'axe de rotation (A), à la fin de l'opération de cisaillement/malaxage et avant la remontée de l'outil de sorte de rompre un éventuel collage de la deuxième surface externe sur la surface d'appui,

- le guide peut être formé dans le poinçon de sorte de simplifier l'outillage.
- l'ouverture dans le guide peut être fermée par une pièce amovible lors de l'aplatissement, en sorte d'aplatir le conduit sur tout le droit du guide.

L'invention a également pour objet, selon un deuxième aspect, un conduit contenu dans un corps, tel qu'un conduit raccordé à un réservoir formé dans le corps.

Le conduit comprend un point d'obturation en lequel ce conduit est obturé, dans une partie métallique du conduit.

L'obturation au niveau du point d'obturation est obtenue par le procédé tel que présenté plus haut.

L'invention a encore pour objet, selon un troisième aspect, un dispositif d'obturation d'un conduit contenu dans un corps, tel qu'un conduit raccordé à un réservoir formé dans le corps, en un point d'obturation dans une partie métallique du conduit, permettant la mise en oeuvre du procédé tel que présenté plus haut.

Le dispositif comprend un moyen aplatissement du conduit au niveau du point d'obturation, et un outil apte à entrer en rotation autour d'un axe de rotation (A) sensiblement perpendiculaire aux première et deuxième surfaces internes du conduit, et à effectuer une plongée relative dans le conduit au niveau du point d'obturation selon une direction de plongée sensiblement parallèle à l'axe de rotation (A).

Suivant différentes variantes de réalisation, le dispositif de l'invention comprend une ou plusieurs des caractéristiques présentées ci-après, qui peuvent être prises isolément ou suivant toutes les combinaisons techniquement possibles :
- la portion de l'outil rotatif destinée à rentrer en contact avec les parois du conduit comprend une partie en métal dont le point de fusion est supérieur à celui de la partie métallique du conduit,
- la portion de l'outil rotatif destinée à rentrer en contact avec les parois du conduit est au moins en partie sensiblement cylindrique de diamètre supérieur à la plus grande largeur du conduit après aplatissement.

Les caractéristiques et avantages de l'invention apparaîtront à la lecture de la description qui va suivre, laquelle est donnée à titre d'exemple non limitatif et en référence aux figures annexées suivantes :
- Figure 1 : représente schématiquement un exemple de conduit contenu dans un corps, avant obturation,
- Figure 2 : représente schématiquement une partie du conduit de la figure 1, en coupe et en élévation,
- Figure 3 et 4 : représentent schématiquement deux exemples de l'étape d'aplatissement du conduit des figures 1 et 2,
- Figures 5 et 6 : représentent schématiquement un exemple du déroulement de l'étape de plongée de l'outil en rotation, après aplatissement selon l'exemple de la figure 4, appliqué au conduit des figures 1 et 2,
- Figure 7 : représente schématiquement un autre exemple du déroulement de l'étape de plongée de l'outil en rotation appliqué au conduit des figures 1 et 2,
- Figure 8 : représente schématiquement encore un autre exemple de déroulement de l'étape de plongée de l'outil en rotation sur un autre conduit,
- Figure 9 : représente schématiquement l'obturation obtenue sur le conduit des figures 1 et 2 une fois la mise en oeuvre du procédé terminée.

Le procédé mis au point selon l'invention, dénommé SSW (« Shear Stir Welding »), est un procédé d'obturation par cisaillement/malaxage de la matière. Il s'applique aux métaux ayant un point de fusion largement inférieur au matériau de l'outil rotatif, par exemple le cuivre et ses alliages, et est particulièrement adapté aux alliages légers de type aluminium. Il consiste à plonger progressivement un outil en rotation dans la matière de la pièce à obturer, au niveau du point d'obturation, après préparation de celle-ci. La matière à obstruer peut être d'une seule nuance ou de nuances différentes.

La pièce à obturer doit être propre (pas de présence de corps gras ou étranger). La présence de corps étranger crée un mélange de matériaux lors du malaxage détériorant fortement les qualités de l'obturation, voir la rendant non-conforme en terme d'étanchéité. Un nettoyage préalable de la pièce peut donc être nécessaire.

Le point d'obturation peut être situé à l'extrémité de la pièce métallique. Dans ce cas, l'orifice du réservoir débouche directement à l'extérieure de la pièce. Pour la mise en oeuvre de l'invention, la forme de l'extrémité du réservoir doit constituer un conduit d'une largeur inférieure au diamètre de l'outil utilisé pour l'obturation et d'une longueur supérieure au diamètre de l'outil. Le point d'obturation peut également se situer en un point d'un conduit pouvant être d'une grande longueur, celui-ci se prolongeant en amont et en aval du point d'obturation. La forme du conduit peut être circulaire (cas d'un tube/tuyau), trapézoïdale (cas des échangeurs réalisés en roll-bond par exemple), ou autre. Après écrasement, le conduit doit toujours être inférieur au diamètre de l'outil utilisé pour l'obturation et d'une longueur supérieure au diamètre de l'outil.

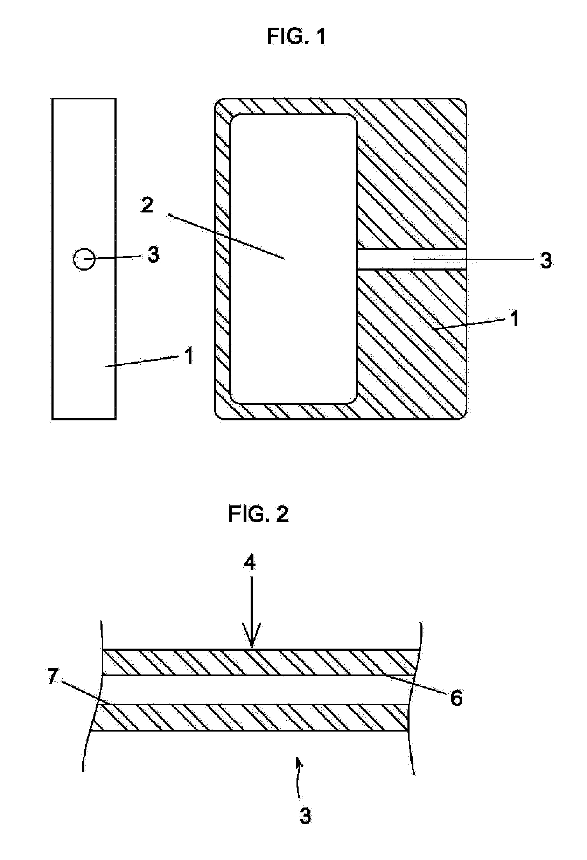

En figure 1 est représenté un exemple de réservoir 2, dans lequel débouche un conduit 3, contenus dans un corps 1 appelé indifféremment corps 1, pièce mécanique 1, ou pièce 1, dans la suite de la description.

Selon sa nature et son usage, la pièce 1 peut avoir des formes très variées pouvant être ou non très différentes de celles du réservoir 2. Dans cet exemple, le conduit 3 est un conduit cylindrique dont la longueur équivaut à plusieurs fois le diamètre. De nouveau, la section du conduit peut avoir des formes très variées.

La pièce 1 est représentée sur la partie droite de la Fig. 1 en en vue de dessus et en coupe, et sur la partie gauche en vue de droite.

La figure 2 est une vue en coupe et en élévation sur laquelle est représentée schématiquement une partie du conduit 3 du réservoir de la figure 1, montrant le point 4 où va être réalisée l'obturation. Dans cet exemple, l'épaisseur de matière est identique sur les parties situées au-dessus et en-dessous du conduit.

Le conduit 3 à obturer doit être préparé avant d'effectuer le malaxage/cisaillement. Il faut que les deux surfaces internes 6 et 7 soient rapprochées par écrasement ou aplatissement. Si les deux faces au niveau du point d'obturation 4 ne sont pas assez proches, le malaxage ne se fera pas et l'étanchéité ne sera pas assurée.

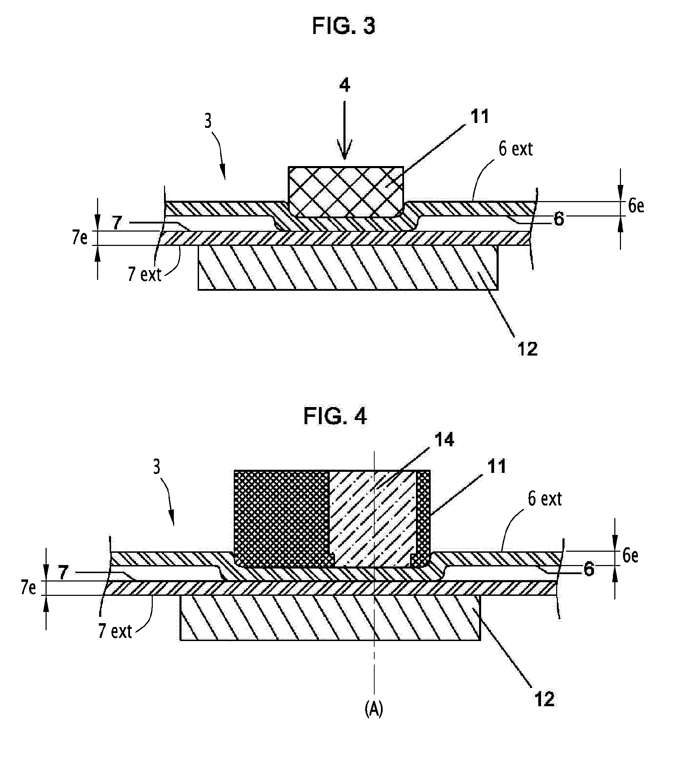

En figure 3 est schématiquement représentée la partie du conduit 3 de la figure 2, après écrasement. L'écrasement du conduit 3 en appui sur un support 12 est réalisé par un outil tel qu'un poinçon 11.

L'effort à appliquer pour obtenir deux faces internes 6, 7 parallèles rapprochées doit être déterminé, généralement de façon expérimentale, pour obtenir une bonne planéité des surfaces avant obturation.

Par exemple, pour une pièce en aluminium de nuance 1050, une obturation d'un conduit de 8 mm et une épaisseur de matière de 1,5 mm au niveau du conduit, une pression de 800 kg doit être appliquée. Pour un tube de cuivre de diamètre 4,5 mm et une épaisseur de matière de 1,5 mm, une pression d'environ 1500 kg doit être appliquée.

Cette pression, adaptée à la nature du matériau et à la forme initiale du conduit, doit permettre de rapprocher les surfaces à obturer tout en assurant la planéité de la surface après le rapprochement. Il ne faut pas de déformations du poinçon 11 et du support 12 entre lesquels le conduit 3 est aplati par écrasement. Il faut donc que les pièces utilisées lors de l'écrasement soient suffisamment rigides pour ne pas se déformer lors de l'effort.

L'aplatissement par écrasement peut aussi se faire dans une matrice afin de donner une forme spécifique au conduit 3 avant l'obturation. Par exemple, une matrice peut permettre de limiter la largeur du conduit 3 lors de l'écrasement et donc de garantir que le conduit 3 écrasé présente une largeur répétable inférieure au diamètre de l'outil qui sera ensuite utilisé pour le cisaillement/malaxage.

Pour obtenir un faible taux de fuite et éviter la pollution du produit présent dans le réservoir 2 à obturer, l'étanchéité du réservoir 2 doit être assurée pendant l'opération de remplissage, pendant l'opération d'écrasement et pendant l'opération d'obturation. La meilleure solution est d'effectuer toutes les opérations nécessaires à l'obturation sur le même poste de travail que le poste de remplissage, de façon automatique et dans un temps court.

Comme représenté sur la figure 4, une façon d'assurer l'étanchéité du réservoir 2 pendant la phase d'obturation est de réaliser l'aplatissement par écrasement du conduit au moyen d'un poinçon 11 de plus grande dimension qui assurera également la fonction de guide ultérieurement pour l'outil de cisaillement/malaxage.

L'écrasement est ainsi réalisé sur une longueur du conduit 3 un peu plus importante que celle requise pour l'obturation, au moins du côté du réservoir situé à gauche dans l'exemple représenté sur la figure 4.

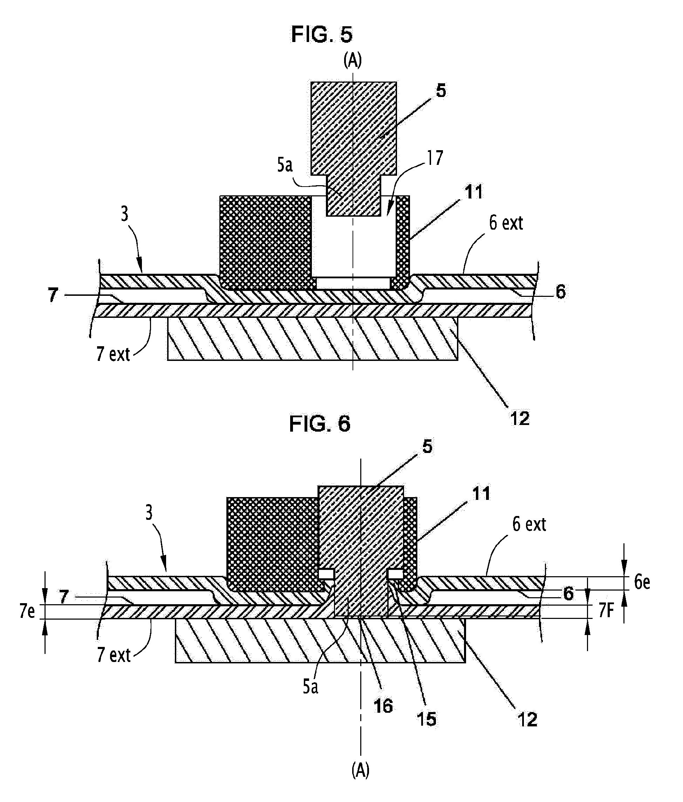

Comme on le verra plus loin en référence aux figures 5 à 8, le poinçon 11 peut assurer les fonctions d'aplatissement et de guidage. Dans ce cas, il est pourvu d'une ouverture destinée, dans sa partie haute de plus grand diamètre, à guider l'outil utilisé pour le cisaillement /malaxage, et, dans sa partie basse de plus petit diamètre, à guider et à maintenir la matière cisaillée/malaxée. Cette ouverture est obstruée par une pièce amovible 14 lors de la phase d'aplatissement par écrasement, de sorte que celle-ci conduise également à l'écrasement du conduit 3 au droit du guide. Il faut prendre soin que les pièces permettant l'écrasement et le guidage n'endommagent pas la matière, par exemple en supprimant les arêtes vives sur les angles de ces pièces.

La figure 5 représente schématiquement la plongée d'un outil rotatif 5 dans l'ouverture 17 formant un guide dans le poinçon 11, après le retrait de la pièce amovible 14.

L'outil rotatif 5 est en rotation autour d'un axe de rotation (A) sensiblement perpendiculaire aux deux surfaces internes 6, 7 parallèles du conduit 3.

La figure 6 représente schématiquement le procédé avec l'outil en rotation 5 en position après la fin de sa plongée selon une direction sensiblement parallèle à l'axe de rotation (A).

On peut constater que le cisaillement/malaxage a entrainé un déplacement de matière dans l'espace situé entre l'outil 5 et le guide 11, créant généralement une collerette 15 (la collerette est d'autant plus visible que le diamètre de l'outil et la quantité de matière déplacée est grande).

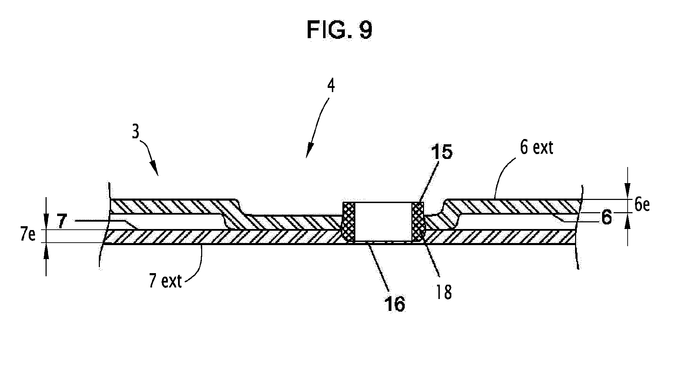

Sur cette représentation schématique, il apparaît une séparation franche entre les deux surfaces internes 6 et 7 dans la zone de cisaillement/malaxage située entre l'outil en rotation 5 et les parois internes du guide formé dans le poinçon 11, comme si les matières s'étaient déplacées mais restaient séparées. Dans la réalité, le cisaillement/malaxage entraine un mélange des matières dans un volume 18 représenté en figure 9 et qui sera décrit plus loin. Avantageusement, comme on peut le voir sur la figure 6 ou sur la figure 9, l'outil en rotation 5 ne traverse pas totalement l'épaisseur de matière 7e placée entre la surface interne 7 et la surface externe 7. Il traverse seulement l'épaisseur de matière 7f, laissant ainsi subsister un opercule de matière 16 de faible épaisseur du coté de la surface externe 7ext.

Le guide dans le poinçon 11 permet de maintenir l'étanchéité dans la pièce 1 pendant la réalisation de l'opération de cisaillement/malaxage. Dans le cas où le réservoir 2 est sous pression ou en dépression, l'effort exercé par le guide évite toute déformation d'une ou des deux faces internes 6, 7 sous l'effet de la pression exercé par le fluide contenu dans le réservoir 2.

Le guide dans le poinçon 11 permet également de canaliser le déplacement des matériaux lors du cisaillement/malaxage en délimitant un volume disponible entre celui-ci et l'outil en rotation dans lequel les matériaux vont pouvoir se déplacer.

Selon une autre variante de réalisation de l'invention, une fois l'opération de rapprochement effectuée, un guide distinct du poinçon 11 est mis en place sur la surface externe 6ext du conduit 3 par laquelle sera introduit l'outil en rotation 5 de cisaillement/malaxage.

Afin d'assurer l'étanchéité, le guide, formé dans, ou distinct du, poinçon 11, est maintenu avec une certaine pression sur le conduit 3 à obturer. Cette pression est à déterminer en fonction de l'application. Elle est d'autant plus forte que la pression du fluide dans le réservoir 2 est éloignée de la pression atmosphérique. Cependant, cette pression ne doit pas pour autant déformer la matière du conduit 3 à obturer ni celle du guide. Elle est maintenue durant toute l'opération de cisaillement/malaxage. Dans un système automatisé, cette pression est avantageusement contrôlée de façon à surveiller la qualité de l'obturation.

Le guide doit donc avoir la rigidité nécessaire en fonction de la pression exercée. Généralement, un guide en acier mi-dur convient.

La pression sur le conduit 3 à obturer doit être exercée de façon homogène en conservant la planéité des surfaces internes 6, 7. L'ensemble sous pression est installé sur une table 12 ou un support 12. La rigidité de l'ensemble table 12 / pièce 1 comprenant le conduit 3 à obturer / guide ou poinçon 11 avec guide et outil en rotation 5, doit être optimale car la présence de vibrations entraine une oscillation de l'outil en rotation 5 et donc une mauvaise obturation avec un risque d'endommagement de composants mécaniques. Il peut être utile d'ajouter un guidage supplémentaire à l'outil en rotation si on veut améliorer cette rigidité.

La table ou le support 12 doit aussi avoir une mauvaise conductivité thermique. Il est important, pour que le cisaillement/malaxage soit homogène, que l'énergie apportée reste concentrée pour la réalisation de la collerette 15.

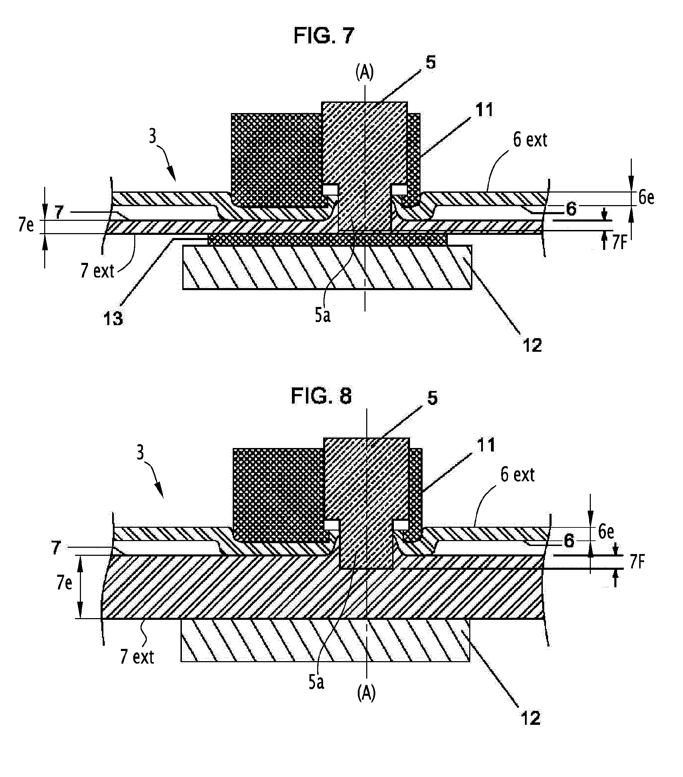

Comme représenté en figure 7, dans le cas d'un conduit 3 avec des épaisseurs de matière 6e, 7e faibles, un patin dédié 13 est mis en place sous le point d'obturation 4, afin de limiter la dissipation thermique. Ce patin 13 pourra être en inox par exemple, ou revêtu d'une couche peu conductrice thermiquement obtenue par un traitement de surface approprié. Cependant, ce patin 13 doit être dans une matière suffisamment solide pour ne pas casser ou se détruire pendant la réalisation du cisaillement/malaxage.

Dans le cas d'épaisseurs de matière 6e, 7e faibles (par exemple de moins de 3 mm pour un alliage léger de type aluminium), une fois le guide mis en appui sur le conduit 3 dont les faces internes 6, 7 sont rapprochées, deux mouvements vont être mis en oeuvre successivement, celui de l'outil en rotation 5 puis celui du patin 13 :
- l'outil en rotation 5 va plonger progressivement à l'intérieur du guide de façon à effectuer le cisaillement/malaxage,
- après avoir atteint sa position basse, l'outil en rotation 5 est maintenu à cette position pendant une courte durée d'homogénéisation avant d'être relevé,
- puis le patin 13 est mis en mouvement pendant une courte durée sous la pièce à obturer.

Les efforts et l'apport d'énergie développés lors de l'opération de cisaillement/malaxage sont importants et peuvent entrainer un collage du conduit 3 à obturer sur la table 12 de la machine réalisant l'opération. Le mouvement du patin 13 permet d'éviter le collage, ou de décoller le conduit 3 du patin 13 en cas de collage. Ce mouvement ne doit pas se faire pendant la rotation de l'outil 5 afin de ne pas perturber le cisaillement/malaxage. Ce mouvement est particulièrement intéressant dans le cas d'applications automatisées. Cependant, le collage pouvant se produire n'est pas destructif pour les qualités de l'obturation.

Le mouvement du patin peut par exemple être une rotation autour d'un axe sensiblement parallèle à l'axe de rotation (A), une translation dans un plan sensiblement perpendiculaire à cet axe de rotation (A), ou encore un mouvement combinant une telle rotation et une telle translation, et doit se faire juste après la remontée de l'outil en rotation 5 (lors de la phase de refroidissement).

Dans le cas d'épaisseurs de matière 6e, 7e plus importantes, en particulier pour la deuxième épaisseur 7e de la deuxième paroi du côté de la table ou du support 12, le mouvement du patin 13 peut-être supprimé car les problèmes de collage n'auront pas lieu, la diffusion de la chaleur se faisant au travers de l'épaisseur de matière 7e suffisamment importante pour que la dissipation de la chaleur soit telle que la température de la matière au voisinage de la surface 7ext n'est pas suffisante pour engendrer un collage avec la surface de la table 12 de la machine sur laquelle est réalisée l'opération.

Le mouvement du patin 13 peut aussi être supprimé grâce à l'apport d'une pièce (généralement de même nature que le conduit 3 à obturer) permettant d'épaissir l'ensemble et donc d'éviter le collage.

Une fois préparé et mis en place, l'outil en rotation 5 va venir réaliser le cisaillement/malaxage. L'outil en rotation 5 va donc venir pénétrer la matière tout d'abord par la première surface externe 6ext de la première paroi, dans la première épaisseur de matière 6e jusqu'à la première surface interne 6, puis par la deuxième surface interne 7 de la deuxième paroi, dans la deuxième épaisseur de matière 7e jusqu'à la deuxième surface interne 7ext, ou dans une épaisseur 7f inférieure à la deuxième épaisseur de matière 7e en s'arrêtant avant la deuxième surface interne 7ext.

La vitesse de rotation et la vitesse de plongée de l'outil en rotation 5 sont déterminées en fonction des parois du conduit 3 à obturer. Une fois que l'outil en rotation 5 aura pénétrer la matière jusqu'à la profondeur déterminée, l'outil en rotation 5 va rester en place pendant un temps déterminé aussi par la nature des parois à obturer. Ce temps permet d'homogénéiser le malaxage. Une fois ce temps écoulé, l'outil en rotation 5 retourne en position initiale et il ne reste plus qu'à évacuer la pièce 1 dont le conduit 3 est maintenant obturé et étanche.

La figure 8 représente un exemple d'application dans lequel l'outil en rotation 5 pénètre la deuxième paroi, par sa deuxième surface interne 7 jusqu'à une épaisseur 7f inférieure à l'épaisseur de matière 7e, suffisante pour assurer un malaxage suffisant des matières à réunir.

Afin de faciliter la sortie de la pièce 1, le guide (lorsqu'il est seul ou formé dans le poinçon 11) peut être chanfreiné légèrement dans sa partie basse et comporter une dépouille (comme pour un moulage) d'un ou deux degrés afin de faciliter son évacuation.

Dans le cas d'épaisseurs de matière 6e, 7e importantes, le procédé peut être mis en oeuvre une nouvelle fois sur une autre pièce 1, tout de suite. Par contre, dans le cas d'épaisseurs de matière 6e, 7e faibles, un léger dépôt de matière se produit généralement sur le patin 13 de soudure. Celui-ci peut alors être supprimé afin d'obtenir la planéité requise lors de la mise en oeuvre suivante du procédé.. Une solution de nettoyage mécanique (par exemple par meulage) est la solution préférée. Cependant, le dépôt peut aussi être laissé dans le cas où une nouvelle pièce identique à la première est réalisée (le dépôt sera malaxé et éliminé à l'obturation suivante). Côté outil en rotation 5, il n'y a pas d'encrassement, donc pas de nettoyage à prévoir si les paramètres sont corrects.

D'un point de vue métallurgique, l'obturation est garantie par la conjugaison de deux phénomènes :
- l'échauffement provenant du frottement de l'outil en rotation 5 sur la matière du conduit 3,
- la déformation plastique à chaud engendrée par la descente de l'outil en rotation 5 dans la matière du conduit 3.

Des examens métallographiques montrent un effet d'entaille faible au niveau de la soudure annulaire, ce qui garantie une bonne tenue aux sollicitations mécaniques cycliques (pression et température).

Le matériau du conduit 2 de la pièce 1 obstruée ne rentre pas en fusion mais des phénomènes de diffusion ont lieu à l'interface entre les deux matériaux mis en contacts sous pression à chaud. Cette diffusion sans fusion permet d'utiliser le procédé même en présence de fluide inflammable. Cependant, afin de limiter l'utilisation de matériel de type ATEX, la mise en place d'une ventilation est conseillée.

Dans le cas d'épaisseurs de matière 6e, 7e faibles, le point d'obturation 4 peut être « traversant », c'est-à-dire qu'un perçage peut être obtenu à l'interface ; ceci est provoqué, par exemple, par l'adhérence de l'aluminium sur le patin support 13 en acier, le ligament de matière ou opercule 16 subsistant après l'obturation ayant été rompu lors du détachement de la pièce mécanique 1.

Une application possible du procédé selon l'invention concerne l'obturation d'un échangeur de chaleur après tirage au vide et remplissage d'une dose de fluide réfrigérant inflammable.

L'ensemble des opérations peut être mis en oeuvre sur un poste de travail unique de façon à optimiser la non-pollution du réfrigérant par l'extérieur et éviter aussi une fuite potentielle du réfrigérant vers l'extérieur.

Les échangeurs de chaleur ont besoin d'une bonne conductivité thermique. Ils sont souvent réalisés en alliage léger comme l'aluminium ou, pour certaines applications plus haut de gamme, en cuivre ou alliage de cuivre. Le procédé selon l'invention peut donc être avantageusement mis en oeuvre dans ce type d'application.

Concernant les paramètres d'opération, un premier exemple d'application est donné pour l'obturation d'un conduit 3 de 8 mm de diamètre avec un outil en rotation 5 de 12 mm de diamètre principal, ou présentant une portion 5a destinée à entrer en contact avec les parois du conduit 3, de 12 mm de diamètre principal. Par ailleurs, on utilise dans cet exemple un poinçon 11 avec guide 17 obtenu par un alésage de 16 mm. Le cisaillement/malaxage est caractérisé par les 4 paramètres caractéristiques de l'outil en rotation 5 repris ci-dessous :

| **Vitesse de rotation (Tr/min)** | **Vitesse de descente (mm/min)** | **Profondeur de descente (mm)** | **Temps de maintien en position basse (s)** |
|---|---|---|---|
| 2500 | 15 | 1,2 | 3 |

Pour cette application, le procédé SSW selon l'invention répond au besoin d'obturation du fait de ses avantages métallurgiques :
- procédé sans fusion : tous les alliages sont obturables par SSW (y compris des assemblages prohibés à l'arc 5000 / 4000 par exemple), possibilité d'utilisation avec un produit inflammable dans l'échangeur (température d'auto-inflammation à vérifier si présence d'oxygène), bonnes propriétés statiques, peu de défauts, très bonnes propriétés en fatigue

Par ailleurs, le procédé SSW selon l'invention répond au besoin d'obturation pour cette application également du fait de ses qualités et sa souplesse :
- rapide / robuste / reproductible, possibilité de travailler sur un plan incliné, possibilité de travailler en présence de gaz, de liquide (même inflammable),très bonne étanchéité (fuite inférieure à 1g/an).

La Fig. 9 représente schématiquement l'obturation obtenue après le retrait de la pièce 1 du dispositif sur lequel le procédé est mis en oeuvre. On voit sur cette figure, au niveau du point d'obturation 4, la protubérance formant une collerette 15, l'opercule 16 subsistant après le colmatage sous l'axe de déplacement de l'outil en rotation 5, ainsi que la zone 18 où la matière a été déplacée par malaxage.

Concernant les paramètres d'opération, un second exemple d'application est donné pour l'obturation d'un conduit 3 de cuivre de 4,5 mm de diamètre, dont les parois présentent des épaisseur de matière 6e, 7e de 1,5 mm.. Après aplatissement par écrasement dans une matrice, le conduit 3 possède une plus grande largeur comprise entre 2,3 et 2,4 mm de façon répétable. L'outil en rotation 5 présente un diamètre principal de 2,6 mm, avec un alésage de 4 mm pour former le guide 17. Le cisaillement/malaxage est caractérisé par les 4 paramètres caractéristiques de l'outil en rotation 5 repris ci-dessous :

| **Vitesse de rotation (Tr/min)** | **Vitesse de descente (mm/min)** | **Profondeur de descente (mm)** | **Temps de maintien en position basse (s)** |
|---|---|---|---|
| 9500 | 30 | 2,5 | 3 |

Pour cette application, les avantages métallurgiques ainsi que la qualité et la robustesse du procédé permettent une application industrielle à grande cadence.

Il est à noter que l'épaisseur initiale des parois du conduit 3 est importante : plus elle sera grande, plus la quantité de matière malaxée sera importante et donc, plus l'obturation finale résistera à des pressions élevées.

Il est rappelé que l'ensemble de la description ci-dessus est donné à titre d'exemple et n'est pas limitatif de l'invention.

En particulier, l'invention ne se limite pas à l'obturation d'un conduit formé intégralement dans un corps 1 et raccordé à un réservoir 2 formé également intégralement dans le corps 1.

Par ailleurs, la forme initiale du conduit 2 n'est pas nécessairement cylindrique.

## Revendications

1. Procédé d'obturation d'un conduit (3) contenu dans un corps (1), tel qu'un conduit (3) raccordé à un réservoir (2) formé dans le corps (1), en un point d'obturation (4) dans une partie métallique du conduit (3), **caractérisé en ce qu'**il comprend les étapes suivantes :
- aplatissement du conduit (3) au niveau du point d'obturation (4) de sorte d'obtenir en ce point d'obturation (4) au moins une première paroi présentant une première épaisseur de matière (6e) délimitée par une première surface interne (6) sensiblement plane et par une première surface externe (6ext) orientées respectivement vers l'intérieur et l'extérieur du conduit (3), et au moins une deuxième paroi présentant une deuxième épaisseur de matière (7e) délimitée par une deuxième surface interne (7) sensiblement plane et parallèle à la première surface interne (6) et par une deuxième surface externe (7ext) orientée vers l'extérieur du conduit (3),
- plongée relative d'un outil en rotation (5) autour d'un axe de rotation (A) sensiblement perpendiculaire aux première et deuxième surfaces internes (6, 7), au niveau du point d'obturation (4), selon une direction de plongée sensiblement parallèle à l'axe de rotation (A), à partir de la première surface externe (6ext) en traversant la première épaisseur de matière (6e) et au moins une partie (7f) de la deuxième épaisseur de matière (7e) en sorte de réaliser la fermeture du conduit (3) par cisaillement et malaxage de la matière d'au moins une partie de la première et de la deuxième épaisseurs de matière (6e, 7e) déplacée par l'outil en rotation (5).

2. Procédé selon la revendication 1 **caractérisé en ce que** l'aplatissement du conduit (3) au niveau du point d'obturation (4) est réalisé de sorte que les première et deuxième surfaces internes (6, 7) soient plaquées l'une contre l'autre afin d'isoler le réservoir (2).

3. Procédé selon les revendications 1 ou 2, **caractérisé en ce que** l'aplatissement du conduit (3) est réalisé alors que le réservoir (2) contient un fluide inflammable et/ou explosif.

4. Procédé selon l'une quelconque des revendications 1 à 3, **caractérisé en ce que** l'outil en rotation (5) est guidé en plongée le long de l'axe de rotation (A) dans la partie haute d'une ouverture traversante (17) formée dans un guide (11).

5. Procédé selon la revendication 4, **caractérisé en ce que** les dimensions de l'ouverture (17) sont telles que, lors de la plongée de l'outil en rotation (5), un volume délimité entre cette ouverture (17) et l'outil en rotation (5) reste disponible pour accueillir la matière du conduit (3) déplacée par l'outil en rotation (5).

6. Procédé selon l'une quelconque des revendications 1 à 5, **caractérisé en ce que** l'aplatissement du conduit (3) est obtenu en positionnant directement ou indirectement la deuxième surface externe (7ext) du conduit (3) sur une surface d'appui (12) et en appliquant un poinçon (11) au niveau du point d'obturation (4) sur la première surface externe (6ext).

7. Procédé selon la revendication 6 **caractérisé en ce qu'**un patin (13) est disposé entre la surface d'appui (12) et la deuxième surface externe (7ext) du conduit (3), en sorte d'éviter le collage de la surface externe (7ext) sur la surface d'appui (12).

8. Procédé selon la revendication 7, **caractérisé en ce que** l'étape de plongée de l'outil en rotation (5) est suivie d'une étape de remontée de cet outil en rotation (5), et **en ce que** le patin (13) est mis en mouvement, notamment de rotation autour d'un axe parallèle à l'axe de rotation (A) et/ou de translation sur un plan perpendiculaire à l'axe de rotation (A), après la plongée, mais avant la remontée, de l'outil en rotation (5).

9. Procédé selon l'une quelconque des revendications 4 et 5 et selon l'une quelconque des revendications 6 à 8, **caractérisé en ce que** le guide (11) est formé dans le poinçon (11).

10. Procédé selon la revendication 9, **caractérisé en ce que** l'ouverture (17) dans le guide (11) est fermée par une pièce amovible (14) lors de l'aplatissement, en sorte d'aplatir le conduit (3) sur tout le droit du guide (17).

11. Procédé selon l'une quelconque des revendications 1 à 10, **caractérisé en ce que** lors de l'étape de plongée, l'outil en rotation (5) ne traverse pas la totalité de l'épaisseur de matière (7e) de la deuxième paroi, laissant subsister un opercule de matière (16) du côté de la deuxième surface externe (7ext).

12. Conduit (3) contenu dans un corps (1), tel qu'un conduit (3) raccordé à un réservoir (2) formé dans le corps (1), comprenant un point d'obturation (4) dans une partie métallique du conduit (3), en lequel le conduit (3) est obturé, **caractérisé en ce que** l'obturation au niveau du point d'obturation (4) est obtenue par le procédé selon l'une quelconque des revendications 1 à 11.

13. Dispositif d'obturation d'un conduit (3) contenu dans un corps (1), tel qu'un conduit (3) raccordé à un réservoir (2) formé dans le corps (1), en un point d'obturation (4) dans une partie métallique du conduit (3), permettant la mise en oeuvre du procédé selon l'une quelconque des revendications 1 à 11, **caractérisé en ce qu'**il comprend :
- un moyen aplatissement (11) du conduit (3) au niveau du point d'obturation (4),
- un outil rotatif (5) apte à entrer en rotation autour d'un axe de rotation (A) sensiblement perpendiculaire aux première et deuxième surfaces internes (6, 7), et à effectuer une plongée relative dans le conduit (3) au niveau du point d'obturation (4) selon une direction de plongée sensiblement parallèle à l'axe de rotation (A).

14. Dispositif selon la revendication 13, **caractérisé en ce que** la portion (5a) de l'outil rotatif (5) destinée à rentrer en contact avec les parois du conduit (3) comprend une partie en métal dont le point de fusion est supérieur à celui de la partie métallique du conduit (3).

15. Dispositif selon l'une quelconque des revendications 13 et 14, **caractérisé en ce que** la portion (5a) de l'outil rotatif (5) destinée à rentrer en contact avec les parois du conduit (3) est au moins en partie sensiblement cylindrique de diamètre supérieur à la plus grande largeur du conduit (3) après aplatissement.
